# EUROPÄISCHE PATENTANMELDUNG

(11) **EP 0 940 770 A2**
(43) Veröffentlichungstag der Anmeldung: **08.09.1999**
(21) Anmeldenummer: 99101289.9
(22) Anmeldetag: 25.01.1999
(51) Int. Cl.: G06K 19/07

(54) **Chipkarte, insbesondere Guthabenkarte**

(30) Priorität: 06.03.1998 DE 19809715; 16.04.1998 DE 19816860
(71) Anmelder: Deutsche Telekom AG, 53113 Bonn (DE)
(72) Erfinder: Kaufhold, Jürgen, Dr., 64807 Dieburg (DE)

(57) **Zusammenfassung**

Die Erfindung betrifft eine Chipkarte, insbesondere Guthabenkarte, mit mindestens einem elektronischen Datenträger (1), in die eine optische Anzeige (2), vorzugsweise eine Flüssigkristallanzeige oder ein polymerer Flächenleuchtkörper, integriert ist. Mit der Erfindung ist es möglich, den Informationsstand des Datenträgers (1) unmittelbar, d.h. ohne externes Lesegerät auf der optischen Anzeige (2) sichtbar zu machen. Hierzu wird beispielsweise für eine benutzerdefinierte Zeitspanne ein Stromkreis durch einen Mikroschalter geschlossen. Über einen Taster (8) kann bei der Abfrage die Informationsabfolge gesteuert werden. Die Energieversorgung erfolgt durch ein Solarzellenmodul oder eine Primärbatterie. Darüber hinaus kann beispielsweise ein Kondensator als vorsorglicher Energiespeicher dienen.

## Beschreibung

Die Erfindung betrifft eine Chipkarte, insbesondere Guthabenkarte wie Telefon- oder Geldkarte.

Karten mit elektronischen Datenträgern, vorzugsweise mit Kunststoff als Kartenmatrixmaterial, werden zunehmend als tragbare Datenspeicher für den Datenaustausch, unter anderem auch beispielsweise für Zahlungsvorgänge verwendet. Bekannt sind die Chip- oder Geldkarte bzw. die Telefonkarte. Es ist jedoch zu erwarten, daß die elektronischen Datenträger in Form von Chipkarten darüber hinaus auch in anderen Bereichen eingesetzt werden, wie beispielsweise im Bereich der Krankenhäuser, der Versicherungen oder für die Personenidentifikation und dort die Magnetkarten ablösen.

Zur Zeit ist beim Gebrauch dieser Chip- oder Geldkarten bzw. Telefonkarten der Dateninhalt besonders dann von Interesse, wenn im Rahmen eines elektronischen Zahlungsvorganges eine Auf- oder Abbuchung erfolgt. Von "Bargeld" als Zahlungsmittel unterscheidet sich eine solche Datenträgerkarte jedoch dadurch, daß der jeweilige Informationsinhalt, z.B. Restguthaben, nicht unmittelbar sondern erst in Verbindung mit einem möglicherweise stationären externen Lesegerät erhalten werden kann.

Neben stationären Lesegeräten, wie Kartentelefonen, Bankautomaten oder Händlerterminals für das Abbuchen von einer Geldkarte, sind weiterhin mobile Kartenleser bekannt, mit denen Inhalte der elektronischen Datenträger ausgelesen und angezeigt werden können. Die auszulesende Karte wird dazu in das Kartenlesegerät eingeschoben.

Unvorteilhaft dabei ist jedoch, daß zum Erhalt von Informationen über ein auf der Karte vorhandenes Guthaben oder von anderen auf der Karte gespeicherten Daten stets ein solches externes Kartenlesegerät mitgeführt werden muß und die auf dem Datenträger gespeicherten Informationen nicht unmittelbar vom Benutzer abrufbar sind.

Der Erfindung liegt daher die Aufgabe zugrunde, eine Chipkarte zur Verfügung zu stellen, bei welcher die auf dem Datenträger gespeicherten Daten unmittelbar und ohne Kontakt mit einem externen Lesegerät anzeigbar sind.

Die Lösung der Aufgabe besteht in einer Chipkarte mit einer optischen Anzeigeeinheit und einem elektronischen Bauelement, die in die Kartenmatrix integriert sind, wobei das elektronische Bauelement auf dem Datenträger gespeicherte Daten auszulesen und zur Darstellung an die Anzeigeeinheit weiterzuleiten imstande ist.

Die optische Anzeigeeinheit umfaßt in einer vorteilhaften Weiterbildung der Erfindung einen Flächenleuchtkörper aus polymeren Material, insbesondere ein Display aus polymeren Flächenleuchtdioden, die beispielsweise ein vom elektronischen Bauelement ansteuerbares Matrixdisplay bilden. Derartige Flächenleuchtdioden aus Polymeren (pLEDs) haben gegenüber herkömmlichen Halbleiter-LEDs folgende Vorteile, die sie zum geeigneten Mittel bei der Ausstattung von Chipkarten mit einem optischen Anzeigeelement machen: Sie sind in hinreichend dünner Form herstellbar. Auf einem Kunststoff, z.B. PTE, als Trägermaterial aufgebracht, lassen sie sich gut in eine Datenträgerkarte integrieren und sind wie diese mechanisch flexibel. Sie haben aufgrund der vergleichsweise hohen Quantenausbeute und dem damit verbundenen hohen Wirkungsgrad eine vergleichsweise hohe Leuchtdichte bei geringem Stromverbrauch, der auch von kleinen Solarzellen aufgebracht werden kann oder von Primärelementen für eine lange Zeit. Darüberhinaus lassen sie sich durch einfache Beschichtungstechnologien kostengünstig herstellen. Da es sich bei pLEDs um selbstleuchtende Anzeigeelemente handelt, wird für den Benutzer das Ablesen der Anzeige vereinfacht.

Die zum Aufbau einer polymeren Leuchtdiode geeigneten Polymere gehören zur Klasse der konjugierten Polymere, z.B. Poly-para-Phenylen (PPP), Poly-Phenylen-Vinylen (PPV), Polythiophen und Polyacetylen. Dialkoxy-PPV-Systeme liefern derzeit die besten elektrooptischen Daten. Eine polymere Leuchtdiode (pLED) ist daraus wie folgt herstellbar: Auf einen transparenten Glas- oder Kunststoffträger, auf den eine ebenfalls transpartente Indium-Zinn-Oxid (ITO)-Elektrode aufgesputtert ist wird ein dünner Film des halbleitenden Polymers wie eine Elektronik-Lithographie-Beschichtung aufgezogen und mit der Gegenelektrode abgedeckt und luftdicht versiegelt. Bei Anlegen einer geringen Spannung wird das entstehende Licht flächenhaft durch die Glas- oder Kunststoffschicht abgestrahlt. In bekannter Weise läßt sich dann ein Anzeigeelement auf der Basis von pLEDs herstellen.

Alternativ kann ein LC-Display als optische Anzeigeeinheit eingesetzt werden.

Das zum Datenaustausch zwischen Anzeigeeinheit und dem elektronischen Datenträger der Chipkarte erforderliche Bauelement vorzugsweise ein Mikroprozessor. Anzeigeeinheit und/oder elektronisches Bauelement werden durch eine unabhängige Energieversorgung mit Strom bzw. Spannung versorgt, die ebenfalls in die Karte integriert ist. Die Energieversorgung wird vorteilhaft durch ein Solarzellenmodul realisiert, das vorzugsweise mit einem Energiespeicher, z.B. einem Kondensator, verbunden ist. Alternativ oder kombiniert mit dem Solarzellenmodul kann die Energieversorgung mit einem Primärelement, z.B. Batterie, insbesondere Folienbatterie, vorgenommen werden. Eine Folienbatterie hat wie auch ein Solarzellenmodul den Vorteil, daß es sich mechanisch derart in die Kartenmatrix integrieren läßt, daß die Gesamtabmessungen der Karte nicht oder nur geringfügig verändert werden.

Ein Solarzellenmodul hat darüber hinaus den Vorteil, daß die Energieversorgung der Lese- und Anzeigemodule nicht vom Aufladungszustand eines irgendwie gearteten Primärelements abhängt. Damit hängt die Lebensdauer der Karte nicht von der Lebensdauer des Primärelements ab.

Zwischen dem elektronischen Bauelement und den Kontakten des elektronischen Datenträgers besteht eine elektrisch leitende Verbindung derart, daß der eigentliche sicherheitssensible Datenaustausch mit einem externen Lese-/Schreibterminal nicht gestört wird.

Weiterhin ist vorzugsweise zwischen der Spannungsquelle und den versorgten Komponenten ein Schalter angeordnet, welcher vorzugsweise nur für die Dauer der Abfrage des Informationsinhalts durch den Benutzer beschlossen wird. Dieser Schalter ist beispielsweise ein Mikroschalter oder Taster oder besteht lediglich aus zwei, an der Kartenoberfläche angeordneten Kontakten, die vom Benutzer mittels eines leitfähigen Gegenstandes, z.B. mit einer Münze, überbrückt werden können.

Ist die Chipkarte eine Geld- oder Telefonkarte, so erfolgt vorzugsweise im einzelnen über die nach ISO 7816 genormten Kontakte des entsprechenden Datenträgers der Chipkarte und einem geeigneten Mikroprozessor folgender Informationsaustausch:
a) Pin 1 und Pin 8 (V_{cc} und GND) dienen zur Energieversorgung des Datenträgers. Hier erfolgt die Unterbrechung durch einen Mikroschalter oder Taster;
b) Pin 2 (RST-Funktion), über diese Leitung wird der Datenträger der Karte im Abgleich mit dem Mikroprozessor in einen definierten Zustand versetzt;
c) Pin 3 (CLK-Funktion) dient zur Sicherstellung einer identischen Datenrate und zum Taktabgleich zwischen Datenträger und Mikroprozessor;
d) Pin 6 (I/O-Leitung) ist eine serielle Leitung zum Datenaustausch von Datenträger und Prozessor;
e) Pin 4, 5 und 7 sind nicht belegt oder können für andere Funktionen belegt werden.

Kurzbeschreibung der Zeichnung, wobei zeigen:

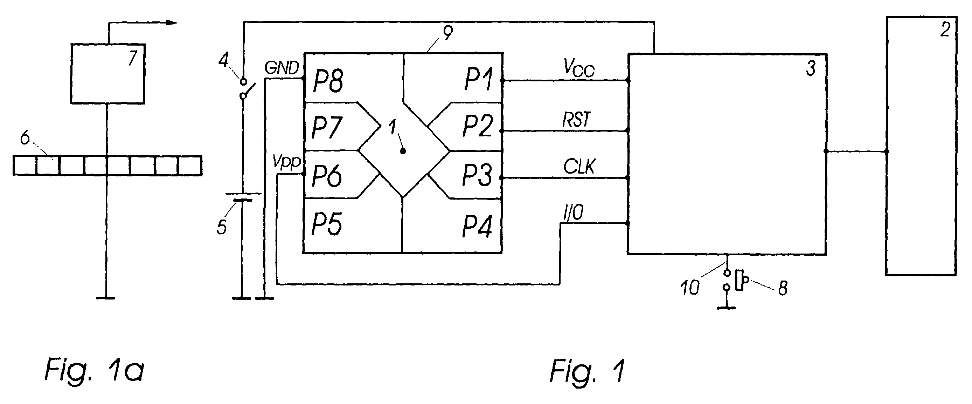

Figur 1 ein Prinzipschaltbild der Funktionselemente für eine integrierte optische Informationsanzeige
Figur 1a Ersatz der Primärbatterie durch ein Solarzellenmodul bzw. Zuschaltung eines Solarzellenmoduls.

Figur 1 zeigt ein Prinzipschaltbild der Funktionselemente für eine integrierte optische Anzeige der in einen elektronischen Datenträger 1 gespeicherten Daten. Der beispielsweise in einer Geld- oder Telefonkarte enthaltene Datenträger 1 ist nach ISO 7816 mit den Kontaktflächen (Pins P 1 bis P 8) dauerhaft elektrisch leitend verbunden. Die Gesamtheit der Kontaktflächen bildet die metallische Kontaktfläche 9 des Datenträgers, welche an der Kartenoberfläche angeordnet ist und über welche externe Lese- bzw. Schreibgeräte auf den Datenträger zugreifen können.

Die Schaltung weist weiterhin ein optisches Anzeigeelement 2, insbesondere eine flüssige Kristallanzeige (LCD) oder einen polymeren Flächenleuchtkörper, insbesondere ein Matrixdisplay auf. A m Anzeigeelement 2, welches in die Kartenmatrix integriert ist, sind erfindungsgemäß auf den Datenträger 1 gespeicherte Daten optisch anzeigbar.

Das Auslesen der Daten wird mit einem Mikroprozessor 3 vorgenommen, welcher auf den Datenträger 1 zugreift und die ausgelesenen Daten dem optischen Anzeigeelement 2 weitergibt. Der Datenaustausch zwischen Datenträger 1 und Mikroprozessor 3 bzw. Anzeigeelement 2 ist möglich, wenn durch Schließen eines Mikroschalters 4 dem Datenträger 1 über den Mikroprozessor 3 eine Versorgungsspannung V_{cc} zugeführt wird. Diese Versorgungsspannung V_{cc} liegt zwischen Pin 1 und Pin 8 an und wird mit einer Primärbatterie 5 zur Verfügung gestellt. Die Primärbatterie 5 kann durch ein Solarzellenmodul 6 nach Figur 1a ersetzt werden, das zusätzlich noch durch einen Energiespeicher 7, beispielsweise einen Kondensator, ergänzt wird.

Der Datenaustausch zwischen Datenträger 1 und Mikroprozessor 3 erfolgt über die serielle Leitung I/O zwischen Pin P 6 und dem Mikroprozessor 3. Über die Verbindung RFT zwischen Pin P 2 und dem Mikroprozessor werden der Datenträger 1 und der Mikroprozessor 3 abgeglichen und in einen definierten Ausgangszustand versetzt. Schließlich wird über die Verbindung CLK zwischen Pin P 3 und dem Mikroprozessor ein Taktabgleich durchgeführt mit dem Zweck, eine identische Datenrate zwischen dem Datenträger 1 und dem Mikroprozessor 3 sicherzustellen. Die Kontaktflächen P 4, P 5, P 7 sind in diesem Beispiel nicht belegt.

Weiterhin ist ein Taster 8 vorgesehen, mit welchem das an einem Signaleingang 10 des Mikroprozessors 3 anliegende Signal veränderbar ist. Durch Betätigen des Tasters 8 ist es möglich, eine Abfolge von mehreren Informationen auf der optischen Anzeige 2 aufzurufen. Bei jedem Tastendruck wird beispielsweise der nächste Punkt eines vorbestimmten Menüs aufgerufen und der entsprechende Dateninhalt angezeigt.

## Patentansprüche

1. Chipkarte, insbesondere Guthabenkarte wie Telefon- oder Geldkarte, mit wenigstens einem elektronischen Datenträger (1), gekennzeichnet durch eine optische Anzeigeeinheit (2) und ein elektronisches Bauelement (3), die in die Kartenmatrix integriert sind, wobei das elektronische Bauelement (3) auf dem Datenträger (1) gespeicherte Daten auszulesen und zur Darstellung an die Anzeigeeinheit (2) weiterzuleiten imstande ist.

2. Chipkarte nach Anspruch 1, dadurch gekennzeichnet,
daß die optische Anzeigeeinheit (2) eine Flüssigkristallanzeige (LC-Display) ist.

3. Chipkarte nach Anspruch 1, dadurch gekennzeichnet,
daß die optische Anzeigeeinheit (2) einen Flächenleuchtkörper aus polymeren Material umfaßt.

4. Chipkarte nach Anspruch 3, dadurch gekennzeichnet,
daß die optische Anzeigeeinheit (2) ein vom elektronischen Bauelement (3) ansteuerbares Matrixdisplay aus polymeren Leuchtdioden (pLEDs) ist.

5. Chipkarte nach einem der vorangegangenen Ansprüche, dadurch gekennzeichnet,
daß das elektronische Bauelement (3) ein Mikroprozessor ist, der die Informationsübertragung zwischen dem elektronischen Datenträger (1) und der optischen Anzeigeeinheit (2) steuert.

6. Chipkarte nach einem der vorangegangenen Ansprüche, dadurch gekennzeichnet,
daß das elektronische Bauelement (3) schaltungstechnisch und bauartlich in den Datenträger (1) der Chipkarte eingearbeitet ist.

7. Chipkarte nach einem der vorangegangenen Ansprüche, dadurch gekennzeichnet,
daß ein Solarzellenmodul (6) in die Kartenmatrix integriert ist, welches zur Energieversorgung des elektronischen Bauelements (3) und/oder der optischen Anzeigeeinheit (2) dient.

8. Chipkarte nach Anspruch 7, dadurch gekennzeichnet,
daß das Solarzellenmodul (6) einen Energiespeicher (7), vorzugsweise einen Kondensator, aufweist.

9. Chipkarte nach einem der vorangegangenen Ansprüche, dadurch gekennzeichnet,
daß die Energieversorgung der elektronischen Komponenten durch Primärelemente (5), insbesondere durch eine Folienbatterie erfolgt.

10. Chipkarte nach einem der Ansprüche 7 bis 9, dadurch gekennzeichnet,
daß im Stromkreis zur Energieversorgung des elektronischen Bauelements (3) ein Schalter (4) angeordnet ist, der vom Benutzer zu betätigen ist.

11. Chipkarte nach Anspruch 10, dadurch gekennzeichnet,
daß der Schalter (4) mittels eines an der Chipkarte angeordneten Tasters durch Tastendruck schließbar und ansonsten offen ist.

12. Chipkarte nach Anspruch 10, dadurch gekennzeichnet,
daß der Schalter (4) ein kapazitiver Schalter ist.

13. Chipkarte nach Anspruch 10, dadurch gekennzeichnet,
daß der Schalter (4) durch zwei an der Kartenoberfläche liegende Kontakte gebildet ist, welche vom Benutzer überbrückbar sind, z.B. durch einen metallischen Gegenstand.

14. Chipkarte nach einem der vorangegangenen Ansprüche, dadurch gekennzeichnet,
daß ein Taster (8) an der Chipkarte angeordnet, vorzugsweise in die Kartenmatrix integriert ist, mit welchem das an einem Steuereingang des elektronischen Bauelements (3) anliegende Signal veränderbar ist, wobei über diesen Steuereingang die anzuzeigenden Informationen auswählbar sind.
